# EUROPEAN PATENT APPLICATION

(11) **EP 1 992 303 A2**
(43) Date of publication of application: **19.11.2008**
(21) Application number: 08251704.6
(22) Date of filing: 14.05.2008
(51) Int. Cl.: A61C 7/22, A61C 8/00, A61C 7/28

(54) **Orthodontic system with hook device**

(30) Priority: 16.05.2007 US 749222
(71) Applicant: ORMCO CORPORATION, Orange, CA 92867 (US)
(72) Inventor: Cercoran, Kevin, Corona, CA 92882 (US); Yeh, Jonathan, Chino, CA 91710 (US)
(74) Representative: Findlay, Alice Rosemary

(57) **Abstract**

An orthodontic hook device (10) for use with an implant secured to a first location on the dental arch of a patient generally comprises a base member (12) configured to be slidably received on an archwire (22) secured to the dental arch and a hook member (16) extending from an outer surface (14) of the base member (12). The hook member (16) includes a first edge (30) and a second edge (32), which have different profiles and are spaced apart to provide the hook member (16) with a thickness (t). The second edge (32) defines at least one notch (38) configured to retain an end of a biasing member (132), which includes an opposite end secured to the implant.

## Description

The present invention relates generally to orthodontics, and more particularly to an orthodontic hook device and appliance system used to effect orthodontic treatment.

Orthodontic treatment involves movement of malpositioned teeth to orthodontically correct positions. During treatment, small orthodontic appliances known as brackets are often connected to anterior, bicuspid, and molar teeth, and an archwire is placed in a slot of each bracket. The archwire forms a track to guide movement of the brackets and the associated teeth to desired positions. Typically, the ends of the archwire are held by appliances known as buccal tubes that are secured to a patient's molar teeth. The brackets, archwires, and buccal tubes are commonly referred to as "braces."

To effect the desired orthodontic treatment, one or more auxiliary implants may be used in combination with a set of braces. For example, a miniscrew or other anchor may be secured to one of the patient's dental arches at a first location in the patient's mouth. A ligature or biasing member, such as a spring or elastomeric band, is then coupled the miniscrew and secured to the archwire at a second location in the patient's mouth. The biasing member is placed under tension so that a force is exerted on the archwire to help reposition teeth secured to nearby brackets.

In some applications, the biasing member is secured to the archwire by an orthodontic hook device. Such devices typically include a base having a tubular or C-shaped cross-section and a hook extending from the base. When provided with a C-shaped cross-section, the base can be side-loaded onto the archwire such that removal of archwire from the buccal tube or brackets is not required. The base is then crimped to secure the hook device to the archwire. As a result, forces exerted on the hook device by the biasing member are transmitted to the archwire to help reposition the group of teeth connected to nearby brackets.

Conversely, when provided with a tubular cross-section, the base must be end-loaded onto the archwire. This may require removing the archwire from the buccal tubes and brackets if the set of braces has already been installed. In such instances, after the base is positioned on the archwire, the archwire is then inserted back through any brackets between the hook device and buccal tube and is secured to the buccal tube. The base may be configured to slide relative to the archwire to reposition a particular tooth instead of a group of teeth. In particular, when a biasing member exerts forces on the hook device, the base is intended to slide toward an adjacent bracket so that the forces are primarily transmitted to that bracket rather than to the archwire. Thus, in such applications sliding mechanics are used to effect treatment.

The hooks extending from the base are typically rods of material having an enlarged end for retaining the biasing member on the rod. For example, U.S. Patent No. 4,639,219 to Gagin discloses a surgical ball hook comprising a tubular base and an elongate arm or bar extending from the base at a right angle. The elongate arm includes a free end having a ball-shaped head to help retain a ligature looped onto the elongate arm. In other orthodontic hook devices, the rods are bent to define one or more curved sections for retaining the biasing member on the rod. The AbsoAnchor hooks commercially available from Great Lakes Orthodontics, Ltd. are examples of such devices.

Although orthodontic hook devices having the configurations discussed above may suffice for some treatments, Applicants have found that oftentimes conventional hook devices will yield and deform before the desired activation force to effect treatment is achieved. For example, the desired activation force to reposition teeth may be 500 gram-force or larger. Conventional hook devices, however, typically deform when loads of only 200-300 gram-force are applied. An orthodontic hook device capable of maintaining structural integrity for larger activation forces is therefore highly desirable.

Additionally, in many instances, the ligature or biasing member applies forces to the hook of the orthodontic hook device several millimeters away from the base to provide the desired force vectors for repositioning teeth. For example, the point on the hook where forces are applied by the biasing member may be 8 millimeters or more away from the base. This results in a significant amount of torque being transmitted to the base. When sliding mechanics are being used to effect treatment, this torque may cause the base to rotate until it "bites" or "ratchets" on the archwire. This ratcheting interferes with the movement of the base along the archwire and, therefore, compromises the desired sliding mechanics. Thus, an orthodontic hook device that maintains the principles of sliding mechanics under high loads is highly desirable as well.

An orthodontic hook device for use with an implant secured to a first location on a dental arch generally comprises a base member configured to be slidably received on an archwire secured to the dental arch and a hook member extending from an outer surface of the base member. The base member can be crimpable so that it may be crimped after being received and positioned on the archwire so as to be secured thereto or the base member may remain slidable relative to the archwire. In either case, the base member is configured to be positioned on the archwire at a second location on the dental arch so as to be spaced apart from the implant.

The hook member includes a first edge and a second edge, which have different profiles and are spaced apart to provide the hook member with a sufficient thickness (as measured in a direction parallel to the base member), to provide improved or enhanced resistance to deformation, bending, or yielding. The second edge of the hook member defines at least one notch configured to retain an end of a biasing member, which biasing member includes an opposite end secured to the implant. When retained by the notch, the biasing member is placed in tension such that a force is transmitted to the hook member to reposition teeth proximate the orthodontic hook device. The shape of the orthodontic hook device enables it to withstand significant loads applied by the biasing member without deforming.

In one embodiment, the second edge of the hook member defines a plurality of notches spaced apart from each other. This arrangement enables an orthodontist to select a location for retention of the biasing member depending on the desired force vectors for repositioning nearby teeth. Additionally, this arrangement enables the hook member to retain more than one biasing member if desired. At least a portion of the first edge opposite the plurality of notches may be generally smooth to provide at least a portion of the hook member with a comb-shaped configuration.

In a further embodiment, the hook member includes opposed first and second sides each extending between the first and second edges and a hole extending therethrough between the first and second sides. The hole enables the orthodontic device to be secured to a buccal tube using a ligature, such as an elastomeric band or fine metal wire. For example, a ligature may extend through the hole and be retained by a hook on the buccal tube. When the orthodontic device is positioned between the buccal tube and the implant, such an arrangement helps prevent rotation of the base member relative to the archwire when forces are transmitted to the hook member by the biasing member. This configuration thus reduces or eliminates the tendency for the base member to "bite" or "ratchet" on the archwire.

The invention will now be further described by way of example with reference to the accompanying drawings in which:

Fig. 1 is a perspective view of an orthodontic hook device according to one embodiment of the invention.

Fig. 2 is a cross-sectional view taken along line 2-2 in Fig. 1.

Fig. 3 is a perspective view of a portion of an orthodontic hook device according to another embodiment of the invention.

Fig. 4 is a side elevational view of the orthodontic hook device shown in Fig. 1.

Fig. 5 is a side view of an orthodontic appliance system for repositioning the teeth on a dental arch of a patient.

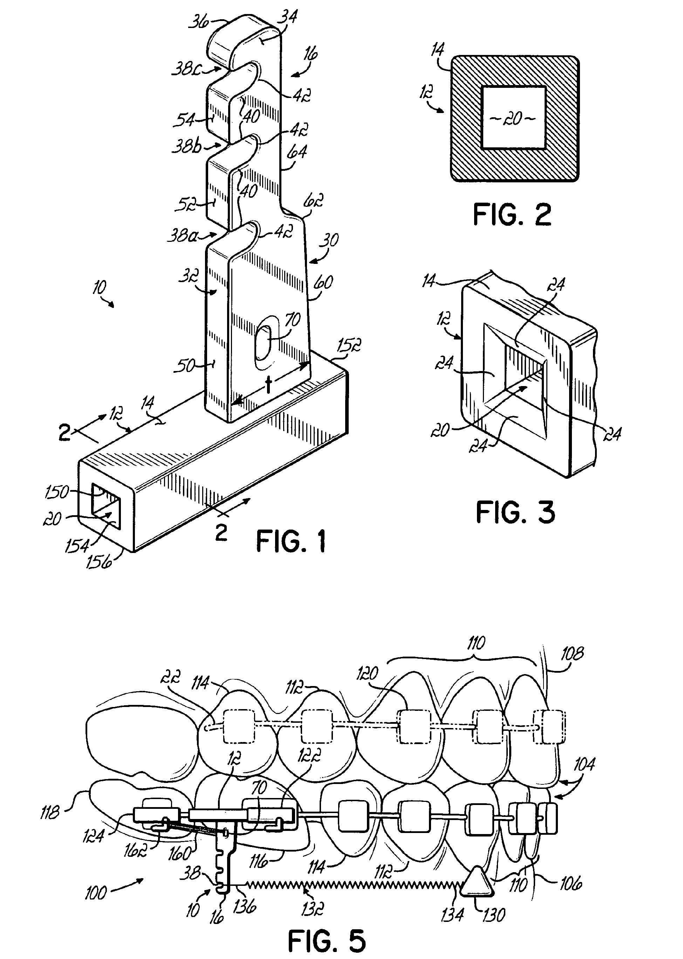

With reference to Fig. 1, one embodiment of an orthodontic hook device 10 is shown. The orthodontic hook device 10 generally comprises a base member 12 having an outer surface 14 and a hook member 16 extending from the outer surface 14. The base member 12 and hook member 16 may be formed integrally or may be separate components secured together. For example, the orthodontic hook device 10 may be a one-piece design formed using a Metal Injection Molding (MIM) process.

In one embodiment, the base member 12 is generally prism-shaped and has a generally rectangular or square cross-sectional profile. The base member 12 may also be tubular so as to define a passage 20 extending therethrough. The passage 20 enables the base member 12 to be slidably received on an archwire 22 (Fig. 5), as will be discussed in greater detail below. The passage 20 may have a generally rectangular or square cross-sectional profile (Fig. 2) like the outer surface 14 of the base member 12 and optionally may include chamfered (i.e., beveled) leading edges 24 (Fig. 3). Alternatively, in a manner not shown herein, the passage 20 may have a substantially different cross-sectional profile than the outer surface 14 of the base member 12.

Now referring to Figs. 1 and 3, the hook member 16 includes a first edge 30 and a second edge 32 having different profiles. Opposed first and second sides 34, 36 extend between the first edge 30 and second edge 32, which are spaced from each other to provide the hook member 16 with a thickness (t) as measured in a direction parallel to the length of base member 12. The thickness of the hook member 16 varies due to the different profiles of first edge 30 and second edge 32. Second edge 32 defines at least one notch 38, which may be any indentation, slot, or groove configured to retain an end of a biasing member 132 (Fig. 5), as will be described in greater detail below. The notches 38a-38c shown in Figs. 1 and 3 are defined by straight sections 40 extending from the second edge 32 and a semi-circular or arcuate section 42.

In one embodiment, the second edge 32 defines a first generally planar section 50 extending away from the outer surface 14, a first notch 38a spaced a distance D1 from the outer surface 14, a second notch 38b spaced a distance D2 from the outer surface 14, and a third notch 38c spaced a distance D3 from the outer surface 14. A second generally planar section 52 of the second edge 32 is positioned between the first notch 38a and second notch 38b, and a third generally planar section 54 is positioned between the second notch 38b and third notch 38c. The first notch 38a and third notch 38c may be equally spaced from the second notch 38b such that the second generally planar section 52 and third generally planar section 54 have the same length. For example, the first notch 38a and third notch 38c may be spaced approximately 2 mm from the second notch 38b (measured from the center of the notches 38). Additionally, D1 may be approximately equal to 4 mm, D2 approximately equal to 6 mm, and D3 approximately equal to 8 mm. Other dimensions are contemplated, those recited being exemplary only.

First edge 30 defines a first generally planar section 60, a curved transition section 62, and a second section 64. The curved transition section 62 is positioned generally opposite the first notch 38a. Thus, the second section 64, which may also be generally planar, is positioned opposite the second notch 38b and third notch 38c. Because the second section 64 is generally smooth and continuous, such an arrangement provides the orthodontic hook device 10 with a comb-shaped configuration. The thickness (t) of the hook member 16 between the first generally planar section 60 of the first edge 30 and the first generally planar section 50 of the second edge 32 is larger than the thickness between the notches 38b and 38c and the second section 64 of the first edge 30 to provide the hook member 16 with increased stability relative to the base member 12. If desired, one or both of the first edge 30 and second edge 32 may extend away from the outer surface 14 at an angle other than 90° to provide the hook member 16 with a slight taper.

The hook member 16 may be a solid body or at least partially hollow so as to include an internal cavity (not shown). In one embodiment, the hook member 16 is constructed from a material capable of withstanding the forces required to effect orthodontic treatment yet still sufficiently malleable so that an orthodontist can adjust the shape of the hook member 16 as desired. One example of such a material is 304 stainless steel. The hook member 16 may be constructed from the same material as the base member 12 or a different material. A hole 70 extends through the hook member 16 between the first and second sides 34, 36 for reasons discussed below.

Fig. 5 illustrates an orthodontic appliance system 100 incorporating an orthodontic hook device 10. The orthodontic appliance system 100 is used in combination with braces 102 to reposition teeth 104 on the lower dental arch 106 or upper dental arch 108 of a patient. Although Fig. 5 illustrates the orthodontic appliance system 100 being used to reposition teeth 104 on the lower dental arch 106, it will be appreciated that the orthodontic appliance system 100 could be used to reposition teeth 104 on the upper dental arch 108 in substantially the same manner. Thus, the discussion below applies equally to both the lower dental arch 106 and upper dental arch 108. Moreover, multiple orthodontic hook devices 10 can be used simultaneously in different areas of the patient's mouth.

By way of background, and for example only, the lower dental arch 106 includes anterior teeth 110, first and second bicuspid teeth 112, 114, and first and second molars 116, 118. Brackets 120 are secured to the anterior teeth 110 and bicuspid teeth 112, 114, and first and second buccal tubes 122, 124 are secured to the respective first and second molars 116, 118. The archwire 22 extends through the brackets 120 and first and second buccal tubes 122, 124 to provide the lower dental arch 106 with the braces 102.

The orthodontic hook device 10 may be either slidably mounted or crimped onto the archwire 22 proximate one of the buccal tubes 122, 124 or brackets 120. In the embodiment shown, the orthodontic hook device 10 is positioned proximate the first buccal tube 122. This arrangement may be achieved by sliding the base member 12 over an unsecured end (not shown) of the archwire 22. Once the base member 12 is advanced along the archwire 22 toward the first buccal tube 122, the unsecured end of the archwire 22 is inserted through and secured to the second buccal tube 124. A crimping device (not shown), such as pliers, wire cutters, or the like, may be used to crimp the base member 12 onto the archwire 22, if desired. The crimping device places the base member 12 in compression on opposite sides of the archwire 22 until a localized area of the base member 12 deforms to "grip" a portion of the archwire 22.

The orthodontic appliance system 100 further includes an auxiliary implant 130 secured to the lower dental arch 106 at a first location. The implant 130 may be a miniscrew, such as those part of the VectorTAS System produced by Ormco Corp. of Glendora, CA. It will be appreciated, however, that the implant 130 may alternatively be any other anchor or similar device used in the field of orthodontics. This includes both permanent and temporary anchors.

A biasing member 132, such as a spring or elastic band, includes a first end 134 coupled to the implant 130 and a second end 136 received and retained by one of the notches 38 in the hook member 16. The biasing member 132 is stretched between the orthodontic hook device 10 and implant 130 so as to exert a force on the hook member 16. The force is transmitted to the base member 12 and, ultimately, to the archwire 22 and/or first buccal tube 122 to reposition one or more teeth 104. For example, if the base member 12 is crimped to the archwire 22, the forces applied to the orthodontic hook device 10 are primarily transferred to the archwire 22. The archwire 22, in turn, applies the force primarily to the nearby brackets 120 or buccal tubes 122, 124 to reposition a group of teeth. If the base member 12 is slidably mounted on the archwire 22, the forces applied to the orthodontic hook device 10 are primarily transferred to the first buccal tube 122 through sliding mechanics. The first buccal tube 122, in turn, applies the force to the first molar 116 to reposition that tooth to a desired location.

Fig. 5 illustrates the second end 136 of the biasing member 132 being retained by the third notch 38c of the hook member 16. Those skilled in the art will appreciate, however, that the second end 136 of the biasing member 132 may alternatively be retained by the first notch 38a or second notch 38b to effect the desired treatment mechanics. Indeed, the position of the implant 130, the position of the orthodontic hook device 10, and the distance from the base member 12 to the point at which force is applied to the hook member 16 by the biasing member 132 all affect the treatment mechanics. The orthodontic appliance system 100 may be installed accordingly within patient's mouth once the proper treatment mechanics for moving malpositioned teeth to orthodontically correct positions are determined.

When the second end 136 of the biasing member 132 is retained by the third notch 38c, the point at which forces are applied to the orthodontic hook device 10 by the biasing member 132 may be a relatively long distance away from the base member 12. And because the base member 12 is prevented from rotating by the archwire 22, this creates a significant torque or moment force acting on the orthodontic hook device 10. The hook member 16 is able to withstand this torque without deforming or buckling relative to the base member 12 due to its unique geometry, which is optimized for structural integrity. For example, the hook member 16 is designed to withstand loads of approximately 500 gram-force applied by the biasing member 132 approximately 8 mm or more away from the outer surface 14 of the base member 12. This represents a significant improvement over prior art hook devices, many of which begin to deform when loads of 200-300 gram-force are applied.

Additionally, when used with sliding mechanics, several features help prevent the base member 12 from "digging" or "ratcheting" onto the archwire 22. In the first instance, the hook member 16 is offset relative to the base member 12 in that the notches 38 are positioned closer to a first end 152 of the base member 12 than to a second end 156. This offset arrangement provides the base member 12 with a large amount of surface area to contact the archwire 22 and counter-balance the moment applied by the hook member 16.

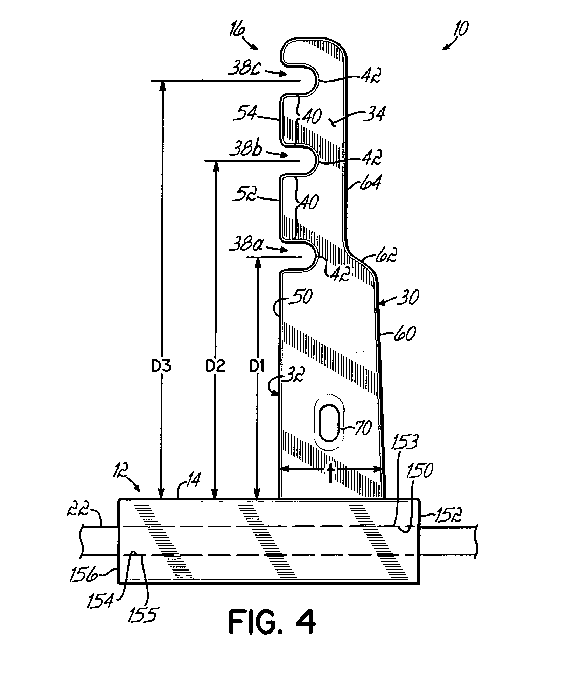

Furthermore, the length of the base member 12 is relatively large to reduce the forces exerted on the archwire 22. For example, the forces applied to the orthodontic hook device 10 normally urge the base member 12 to rotate relative to the archwire 22. The base member 12 is prevented from doing so, however, because a first surface 150 of the passage 20 contacts the archwire 22 proximate the first end 152 and a second surface 154 of the passage 20 contacts the archwire 22 proximate the second end 156. This results in a force couple applied through the contact points or areas 153, 155 (shown in phantom in Fig. 4) of the first surface 150 and second surface 154. When the torque is relatively large, the force couple may create enough friction between the base member 12 and archwire 22 to prevent sliding movement.

By providing the base member 12 with a relatively large length, the contact points or areas 153, 155 on the first surface 150 and second surface 154, respectively, are spaced further apart. As a result, the force couple is not as large as those associated with smaller lengths when applying the same amount of torque. The frictional forces are therefore reduced as well such that the base member 12 is less likely to "ratchet" or clamp onto the archwire 22. In one embodiment, the length of the base member 12 approaches the distance between the first and second buccal tubes 122, 124. The relatively large length of the base member 12 also helps stabilize the entire orthodontic hook device 10 relative to the archwire 22, as greater amounts of the first surface 150 and second surface 154 are likely to come into contact with the archwire 22.

Coatings designed to further reduce friction between the base member 12 and archwire 22 may also be applied to the passage 20. For example, the passage 20 may be coated with Teflon or the like. Use of the chamfered leading edges 24 (Fig. 3) helps prevent the base member 12 from ratcheting onto the archwire 22 as well.

Finally, hole 70 may be used to provide increased stability to orthodontic hook device 10. A ligature 160, such as a metal wire, is secured (e.g., tied) to the hole 70 and to a hook 162 on the second buccal tube 124. The ligature 160 helps distribute some of the force applied to the orthodontic hook device 10 to the second buccal tube 124 to move the second molar 118 with the first molar 116. Such an arrangement also helps stabilize the orthodontic hook device 10 relative to the archwire 22 to prevent the base member 12 from "ratcheting."

While the invention has been illustrated by the description of one or more embodiments thereof, and while the embodiments have been described in considerable detail, additional advantages and modifications will readily appear to those skilled in the art. For example, the first edge 30 of the hook member 16 may define one or more notches similar to those in the second edge 32. Additionally, the orthodontic hook device 10 may be positioned on one dental arch and the implant 130 positioned on the other dental arch.

## Claims

1. An orthodontic hook device for use with an archwire secured to a dental arch of a patient, an implant secured to the dental arch, and a biasing member having a first end and second end, the first end of the biasing member being configured to couple to the implant, the orthodontic hook device comprising a base member having an outer surface and configured to be slidably received on the archwire, and a hook member extending from the outer surface of the base member, the hook member having a first edge, a second edge, and at least one notch defined by the second edge, the first edge and the second edge having different profiles and being spaced apart to provide the hook member with a thickness, the at least one notch being configured to couple to the second end of the biasing member when spaced apart from the implant so that the biasing member is placed in tension therebetween and a force is transmitted to the hook member.

2. The orthodontic hook device of claim 1 wherein a buccal tube is coupled to the archwire and secured to the dental arch at a first location, the implant being secured to the dental arch at a second location, and the buccal tube including a hook configured to retain a ligature, and wherein the hook member further includes opposed first and second sides extending between the first and second edges and a hole extending therethrough between the first and second sides, the hole configured to be secured to the ligature to resist rotation of the orthodontic hook device relative to the archwire when forces are transmitted to the hook member by the biasing member.

3. The orthodontic hook device as claimed in claim 1 or claim 2 wherein the base member is configured to be crimped when received on the archwire to secure the base member to the archwire.

4. The orthodontic hook device of any preceding claim wherein the second edge of the hook member defines a plurality of notches spaced apart from each other.

5. The orthodontic hook device of claim 4 wherein at least a portion of the first edge opposite the plurality of notches is generally planar to provide at least a portion of the hook member with a comb-shaped configuration.

6. The orthodontic hook device as claimed in claim 4 or claim 5 wherein the plurality of notches includes a first notch spaced approximately 4 mm from the outer surface of the base member, a second notch spaced approximately 6 mm from the outer surface of the base member, and a third notch spaced approximately 8 mm from the outer surface of the base member.

7. The orthodontic hook device of any preceding claim wherein the base member defines a passage for receiving the archwire, the passage being coated with a material configured to reduce friction between the base member and the archwire.

8. The orthodontic hook device of any preceding claim wherein the base member is generally prism-shaped and has a generally rectangular cross-sectional profile.

9. The orthodontic hook device of claim 8 wherein the base member defines a passage for receiving the archwire, the passage having a generally rectangular cross-sectional profile with chamfered leading edges.

10. The orthodontic hook device of any preceding claim wherein the hook member is configured to withstand a load of at least 300 gram-force applied to the at least one notch without deforming.

11. The orthodontic hook device of claim 10 wherein the hook member is configured to withstand a load of at least 500 gram-force applied to the at least one notch without deforming.

12. The orthodontic hook device of any preceding claim wherein the base member includes a first end and a second end, the at least one notch of the hook member being positioned closer to the first end of the base member than to the second end of the base member.

13. An orthodontic appliance system for repositioning the teeth on a dental arch of a patient, comprising an archwire configured to be secured to the dental arch, an implant secured to the dental arch at a first location, a biasing member having a first end and second end, the first end of the biasing member being configured to couple to the implant, and the orthodontic hook device of any preceding claim.

14. An orthodontic hook device, comprising a base member having an outer surface and configured to be slidably received on an archwire, and a hook member extending from said outer surface of said base member, said hook member having a first edge, a second edge, and at least one notch defined by said second edge, said first edge and said second edge having different profiles and being spaced apart to provide said hook member with a thickness.

15. The orthodontic hook device of claim 14 wherein said base member is configured to be crimped to an archwire to secure said base member to the archwire.
